# FASCICULE DE BREVET EUROPEEN

(11) **EP 0 435 740 B1**
(45) Date de publication et mention de la délivrance du brevet: **25.05.1994**
(21) Numéro de dépôt: 90403657.1
(22) Date de dépôt: 18.12.1990
(51) Int. Cl.: B60N 2/42, B60R 22/26

(54) **Siège pour véhicule muni d'une ceinture de sécurité à points de fixation embarqués sur l'armature du siège**
Fahrzeugsitz mit in dem Sitzgestell integrierten Befestigungspunkten für einen Sicherheitsgurt
Vehicle seat having a safety belt with fixing points integrated in the seat armature

(30) Priorité: 26.12.1989 FR 8917177
(43) Date de publication de la demande: 03.07.1991
(73) Titulaire: BERTRAND FAURE AUTOMOBILE, F-78391 Bois d'Arcy Cédex (FR)
(72) Inventeur: Dergenne, Frédéric, F-61430 Ste Honorine La Chardonne (FR); Hallet, Michel, F-14320 Clinchamps Sur Orne (FR)
(74) Mandataire: Madeuf, Claude Alexandre Jean

(56) Documents cités:
- EP-A- 0 217 175
- DE-A- 3 229 304
- DE-A- 3 327 970
- DE-A- 3 429 426
- DE-A- 3 613 830

## Description

Dans les véhicules actuels, chaque siège est muni d'une ceinture de sécurité qui est du type connu sous le nom de ceinture de sécurité "type trois points", c'est-à-dire que la fixation de la sangle est réalisée par une de ses extrémités sur un enrouleur automatique solidaire de la carrosserie du véhicule tandis que sa deuxième extrémité est fixée au moyen d'une serrure placée soit à droite, soit à gauche du siège, suivant qu'il s'agit d'un siège gauche ou droit. Le point intermédiaire ou troisième point, c'est-à-dire le point situé entre l'enrouleur automatique et la serrure, est normalement fixé également sur la carrosserie du véhicule, si bien que la sangle formant la ceinture est enroulée sur l'enrouleur automatique et traverse un passant situé sur la carrosserie en un point sensiblement à la hauteur de l'épaule du passager et se fixe par son autre extrémité comme énoncé ci-dessus sur la partie basse du véhicule, soit sur la carrosserie elle-même, soit sur l'ossature de l'assise. Ces ceintures de sécurité présentent cependant l'inconvénient de nécessiter une installation longue, donc coûteuse et d'un grand volume (voir en particulier le DE-A-3 429 426 et le DE-A-3 613 830, correspondant au préambule de la revendication indépendante).

On a cherché à remédier à ces inconvénients en réalisant une ceinture de sécurité dite "trois points embarqués" c'est-à-dire que les trois points de fixation de la ceinture de sécurité sont fixés sur l'armature de l'assise et du dossier du siège, mais on se trouve là en présence d'un inconvénient majeur lorsque, comme c'est le cas maintenant, le dossier du siège peut être réglé en inclinaison à la volonté du passager. En effet, dans ce cas, les mécanismes d'articulation situés entre l'assise et le dossier sont soumis à des efforts extrêmement importants pouvant aller jusqu'à la rupture de ces mécanismes en cas d'accident.

En effet, le brin de sangle passant sur l'épaule et sur la poitrine du passager pour rejoindre le brin ventral de la sangle provoque, surtout lors d'un accident, des efforts extrêmement importants sur le dossier du siège pouvant dépasser la valeur maximum d'effort admissible pour les mécanismes d'articulation.

En plus de cet inconvénient majeur, il est apparu que les enrouleurs à blocage automatique actuellement connus ne pouvaient également pas supporter de tels efforts et que dès lors, au moment du choc, la ceinture de sécurité ne remplit absolument pas son rôle de protection, ce quine fait qu'aggraver les risques corporels du passager.

La présente invention a donc pour objet de réaliser sur un siège de véhicule qui comporte les mécanismes de réglage en inclinaison du dossier, le montage d'une ceinture de sécurité trois points fixés sur l'armature du siège (assise du siège et dossier du siège) mais tout en utilisant le plus souvent un enrouleur automatique et en employant des moyens qui mettent à l'abri l'utilisateur dans tous les cas sans risque d'une destruction trop rapide des mécanismes d'articulation et de l'enrouleur automatique.

Conformément à l'invention, le siège pour véhicule muni d'une ceinture de sécurité à points de fixation embarqués sur l'armature du siège est caractérisé en ce que le passant d'épaule est situé en avant de la partie supérieure de la face avant du dossier et en ce que le mécanisme de blocage (de la sangle formant la ceinture de sécurité) comprend des tubes traversants écartés les uns des autres et disposés dans deux plans verticaux parallèles et dans trois plans horizontaux parallèles, tubes autour desquels s'enroule la sangle de façon à former des brins dont la composante des forces est telle qu'il est créé une force antagoniste produisant un couple qui réduit considérablement le couple exercé sur les mécanismes d'articulation du dossier.

Diverses autres caractéristiques de l'invention ressortent d'ailleurs de la description détaillée qui suit.

Des formes de réalisation de l'objet de l'invention sont représentées, à titre d'exemples non limitatifs, aux dessins annexés.

La fig. 1 est une vue en perspective d'un siège équipé de la ceinture de sécurité "trois points embarqués" sur l'armature du siège, la ceinture étant au repos.

La fig. 2 est une vue correspondant à la fig. 1, la ceinture de sécurité étant en position de travail.

La fig. 3 est une vue en perspective arrière du siège désossé montrant l'armature et les ferrures destinées à la fixation de la ceinture trois points embarqués.

La fig. 4 est une vue de face correspondant à la fig. 3.

Les fig. 5 et 5a montrent, à plus grande échelle, une partie des organes de la ceinture de sécurité conforme à l'invention.

La fig. 6 est une élévation à grande échelle montrant un détail de la ceinture de sécurité passant en haut du dossier.

La fig. 7 est une vue en perspective de face montrant l'armature du siège munie de la ceinture de sécurité.

La fig. 8 est une vue, à plus grande échelle, d'un détail en élévation latérale montrant une variante de réalisation d'une partie de la ceinture de sécurité.

La fig. 9 est une élévation latérale d'un détail d'une autre forme de réalisation de la ceinture de sécurité.

La fig. 10 est une élévation latérale du mécanisme de la fig. 9 dans la position de blocage.

La fig. 11 est une élévation latérale d'une troisième forme de réalisation d'une partie de la ceinture de sécurité.

La fig. 12 est une élévation latérale correspondant à la fig. 11 montrant le mécanisme dans une autre position.

La fig. 13 montre en élévation latérale une modification d'un des organes du siège utilisant une ceinture trois points embarqués.

La fig. 14 est une élévation latérale correspondant à la fig. 13 du mécanisme de cette figure dans une autre position.

La fig. 15 est une élévation latérale d'une variante de la fig. 13.

La fig. 16 montre le dispositif de la fig. 15 en élévation latérale dans une position autre.

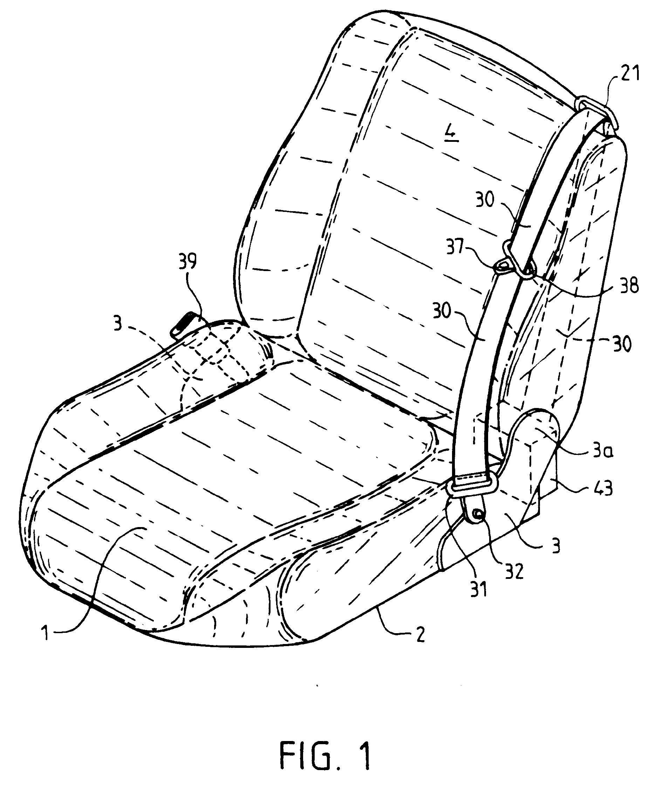

A la fig. 1, on a représenté un siège de véhicule plus spécialement pour l'automobile mais pouvant être également utilisé dans d'autres véhicules, en particulier des avions.

L'assise 1 de ce siège comporte, sur son armature 2, en arrière, des flasques latéraux 3 dont la partie supérieure 3a est destinée à recevoir l'élément fixe du mécanisme de rotation permettant au dossier 4 du siège considéré de se déplacer afin de mettre ce dossier dans une position désirée par l'utilisateur du siège. La commande de ce dispositif de rotation peut être soit manuelle, soit motorisée, ce qui est le cas dans la majorité des véhicules modernes.

Bien entendu, l'armature 2 de l'assise du siège est montée également sur des dispositifs permettant le déplacement longitudinal de ce siège et également l'inclinaison variable de l'assise en utilisant un dispositif de rehausse connu en soi.

Bien entendu, le siège peut comporter dans certains cas, sur la partie supérieure du dossier, un appui-tête qui n'est pas représenté dans le cas présent.

De même, le rembourrage du siège, aussi bien de l'assise que du dossier, est variable à l'infini afin de donner le plus de confort possible au passager.

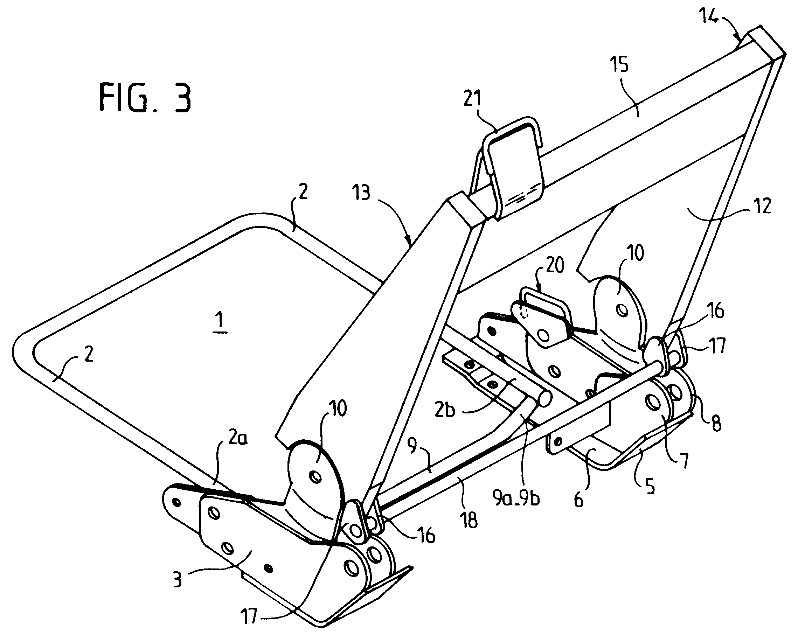

A la fig. 3, on a représenté en perspective arrière l'armature 2 de l'assise 1 qui est constituée par un tube convenablement conformé et dont les extrémités 2a, 2b sont fixées par tout moyen convenable sur des supports 5 identiques constitués chacun par un socle 6 et deux flasques parallèles 7, 8. Ces derniers sont couverts, normalement lorsque le siège est terminé, par les flasques de recouvrement 3. Les socles et les flasques sont réalisés en tôle d'acier de façon à rigidifier la partie arrière inférieure de l'armature de l'assise. De plus, cette partie arrière de l'armature de l'assise est renforcée par un tube 9 dont les extrémités 9a, 9b sont fixées par tout moyen convenable sur les socles 6.

Il y a lieu de remarquer également que le flasque extérieur 8 de chaque support 5 comporte un prolongement supérieur 10 sur lequel sont fixés le flasque fixe du mécanisme d'articulation de dossier de siège et le flasque mobile de ce mécanisme d'articulation, ce dernier étant solidaire de l'armature 12 du dossier 4.

Cette armature 12 du dossier est constituée par deux cadres 13, 14 en forme de trapèze allant s'amincissant vers le haut et reliés à leur sommet par un cadre coffret 15 rigidifiant la partie supérieure de l'armature 12 du dossier.

De plus, il est prévu, à la base des cadres 13 et 14 ainsi qu'à la partie arrière des prolongements supérieurs 10, des goussets 16, 17 permettant la mise en place d'une barre transversale creuse (un tube) 18 dont le rôle sera expliqué plus loin.

Finalement, on trouve sur la partie avant du support 5 droit pour le cas présent un arceau 20 destiné à supporter la serrure de la ceinture de sécurité.

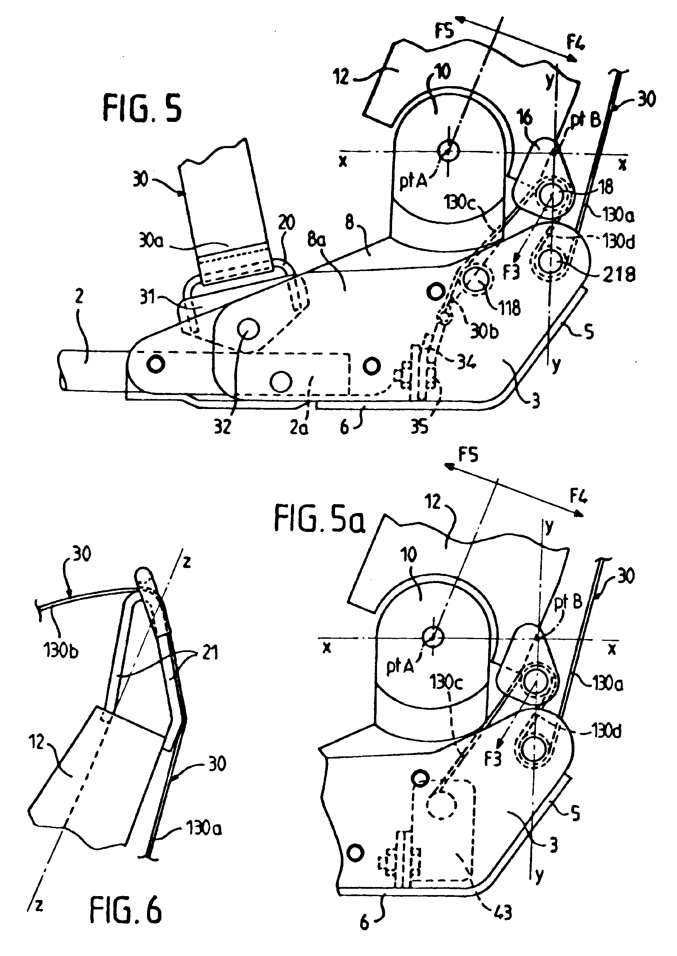

Pour terminer, il est prévu, sur le cadre coffret 15 supérieur de l'armature 12 du dossier, une ferrure 21 fixée à la partie gauche supérieure du cadre (voir fig. 3) et servant de passant au brin supérieur de la ceinture de sécurité. (Il s'agit ici d'un siège gauche, la ferrure 21 est à droite pour un siège de droite). Le passant 21 est situé en avant de la face avant du dossier 4 (voir fig. 6 ligne z-z).

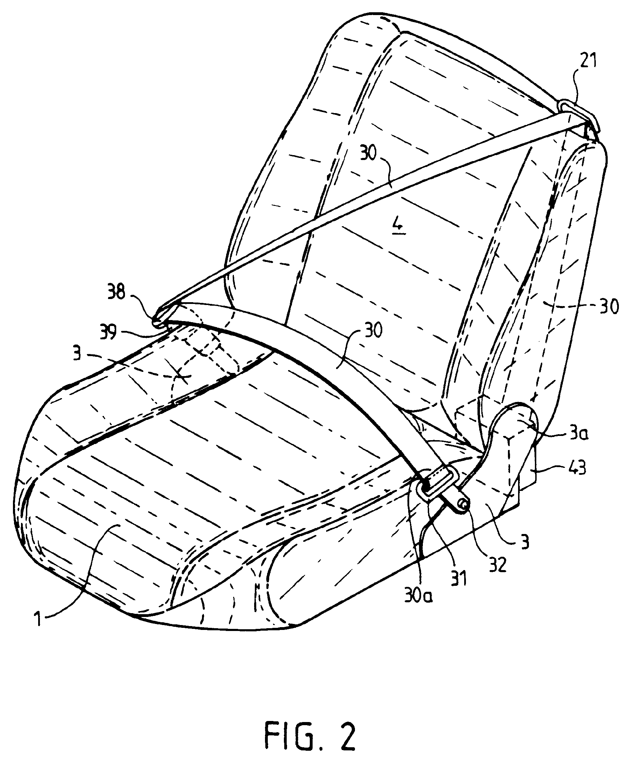

Comme on peut s'en rendre compte à la fig. 2, la ceinture de sécurité 30 est maintenue à son extrémité inférieure libre 30a par un passant 31 qui est rendu solidaire par l'intermédiaire d'un boulon ou rivet 32 du support 5 portant les flasques 7 et 8.

Dans certains cas, le flasque 8 est réalisé (voir fig. 5) par deux plaques 8, 8a solidaires l'une de l'autre afin de permettre la mise en place, pour l'autre extrémité 30b de la ceinture de sécurité 30, d'un point de fixation 34 réalisé par superposition de barres transversales maintenues entre les supports 5, ces plaques de fixation étant réunies par un boulon et écrou 35 mais, pouvant être reliées les unes aux autres par d'autres moyens appropriés.

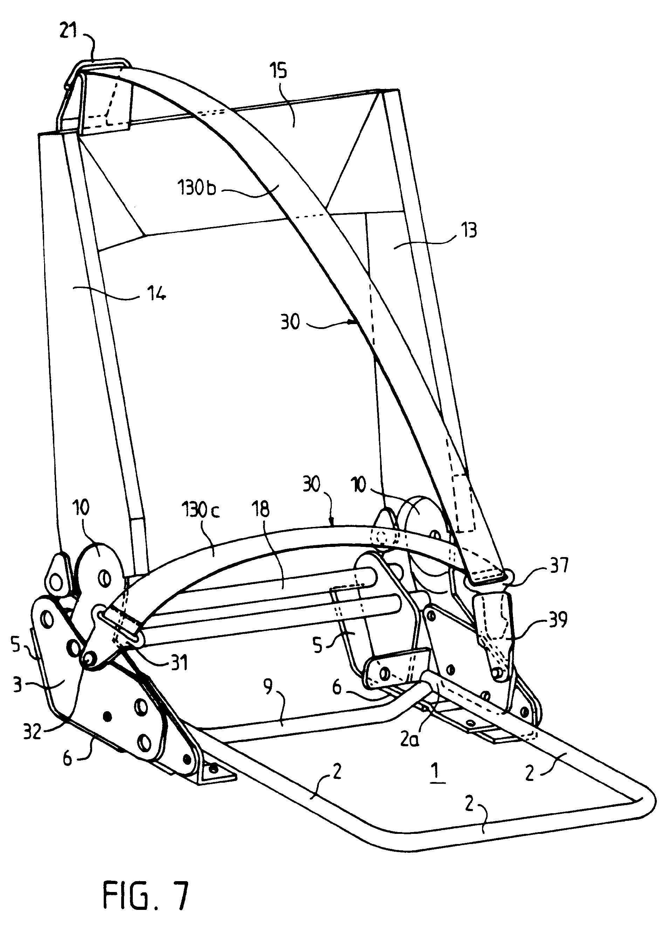

Comme on peut s'en rendre compte à la fig. 5, l'extrémité inférieure 30b de la ceinture 30 passe le long d'un tube transversal 118 reliant les flasques 8 entre eux puis autour du tube 18 fixé sur les goussets 16, revient ensuite autour d'un tube 218 reliant les flasques 8 transversalement entre eux puis finalement, passant derrière le dossier du siège, glisse dans la ferrure supérieure 21 formant passant, l'autre extrémité 30a de cette ceinture étant fixée sur le passant 31 comme expliqué ci-dessus (fig.7).

Il faut noter que si l'effort de traction sur la sangle 130a est égal à 1, du fait des passages successifs sur les points 218, 18 et 118, la force exercée suivant F3 est égale à 2. De ce fait, la force suivant F3 tend à faire tourner le dossier 4, c'est-à-dire son armature 12, vers l'arrière suivant la flèche F4. Cette résultante de force suivant F3 a pour effet d'annuler ou de minimiser le couple de rotation suivant F5 exercé sur le point d'articulation.

Le brin comporte, formant la ceinture de sécurité 30, libre sur lui, un passant 38 terminé par une gâche cruciforme 37 destinée à pénétrer, comme cela est habituel, dans une serrure 39 permettant la fixation de la ceinture de sécurité puisque cette serrure 39 est solidaire de l'arceau 20 (voir fig. 1, 2 et 7).

Si on se reporte aux fig. 2 et 7, on s'aperçoit tout de suite que la ceinture de sécurité 30 est divisée en trois brins successifs, c'est-à-dire le brin arrière 130a, le brin avant de poitrine 130b et le brin ventral 130c, du fait de la ferrure de fixation inférieure 34, du passant supérieur 21 sur le dossier, de la gâche 37 coopérant avec la serrure 39 et finalement du point de fixation à passant 31.

Dans certains cas, le point de fixation arrière 34 est remplacé (voir fig. 5a) par un enrouleur automatique 43 connu en soi et sur lequel est normalement enroulée la plus grande partie de la ceinture de sécurité 30 lorsque celle-ci n'est pas en fonctionnement.

La construction ci-dessus permet donc de faire immédiatement deux remarques :

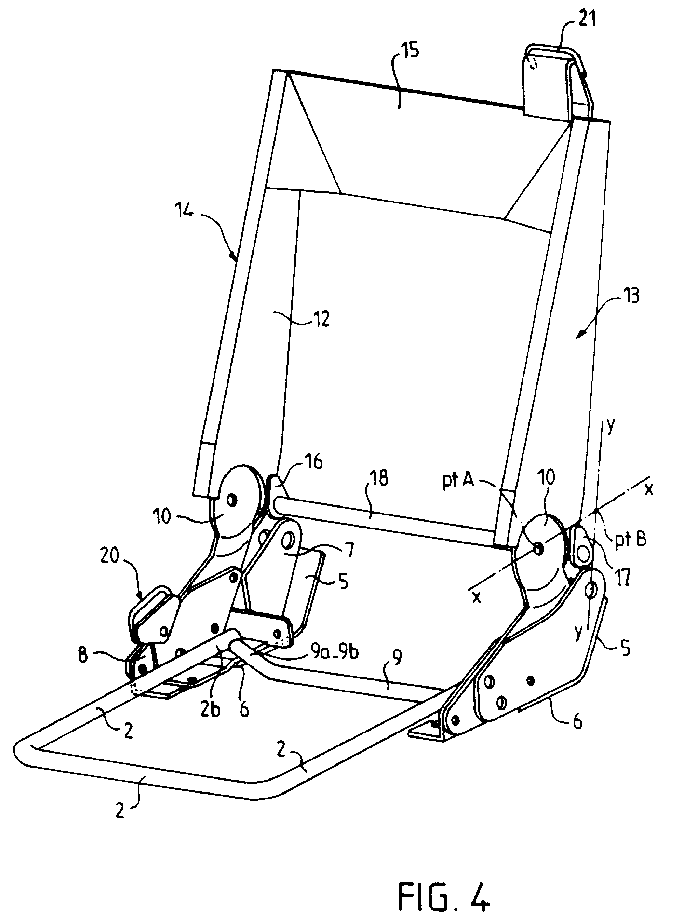

Du fait que les mécanismes d'articulation permettant le déplacement angulaire du dossier 4 du siège sont déplacés vers l'avant de l'assise (point 10) puisque fixés sur les prolongements supérieurs des supports 5 sensiblement dans leur zone médiane, on obtient donc un décentrage de l'armature 12 du dossier et du dossier 4 lui-même par rapport à l'assise 1 (voir fig. 4 où la ligne x-x figure la ligne d'abscisse et y-y la ligne d'ordonnée), le point B étant le point normal d'articulation et le point A le point réel de pivotement du mécanisme de rotation qui se trouve situé à environ 50 mm du point B dans le cas considéré. De plus, le passant 21 étant placé à la partie supérieure du dossier 4 mais sur sa face avant, l'effort de la sangle constituant la ceinture de sécurité 30 est donc transféré au-dessus de l'épaule du passager en avant par rapport au dossier 4, ce qui fait que le couple exercé sur le mécanisme d'articulation est très faible.

En effet (voir fig. 5) les composantes des brins arrière 130d et 130c sur les tubes 118, 18, 218 sont telles qu'une force antagoniste est créée et donne un couple qui réduit considérablement le couple exercé sur les mécanismes d'articulation du dossier.

En résumé, la position en avant des mécanismes d'articulation du dossier 4 et la position du passant 21 solidaire du cadre coffret 15 en avant au-dessus de l'épaule du passager joint à la fixation rigide inférieure du brin 130a soit sur un point fixe, soit sur un enrouleur automatique, évitent tout couple nuisible sur les articulations, ce qui permet la réalisation d'une ceinture de sécurité trois points embarqués.

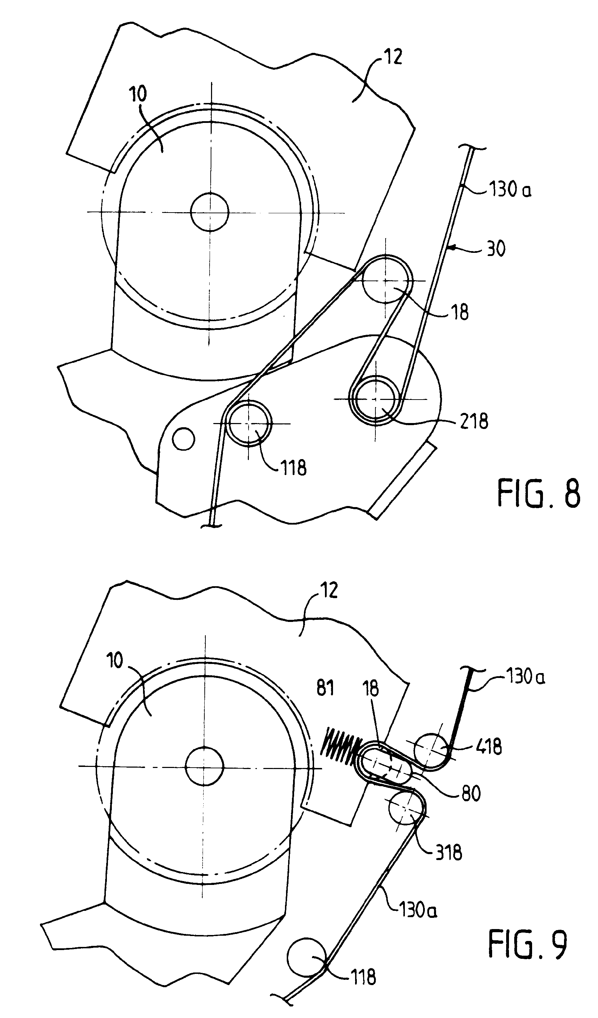

A la fig. 8, le brin inférieur 130a de la ceinture montre une autre réalisation du point fixe inférieur de la sangle possédant pratiquement les mêmes caractéristiques énoncées ci-dessus comme cela est représenté à la fig. 5. En effet les tubes traversants 118 et 218 sont solidaires de l'armature de l'assise du siège, seul le tube 18 de renvoi est fixé sur le bas du dossier en limitant ainsi les efforts appliqués à ce dossier.

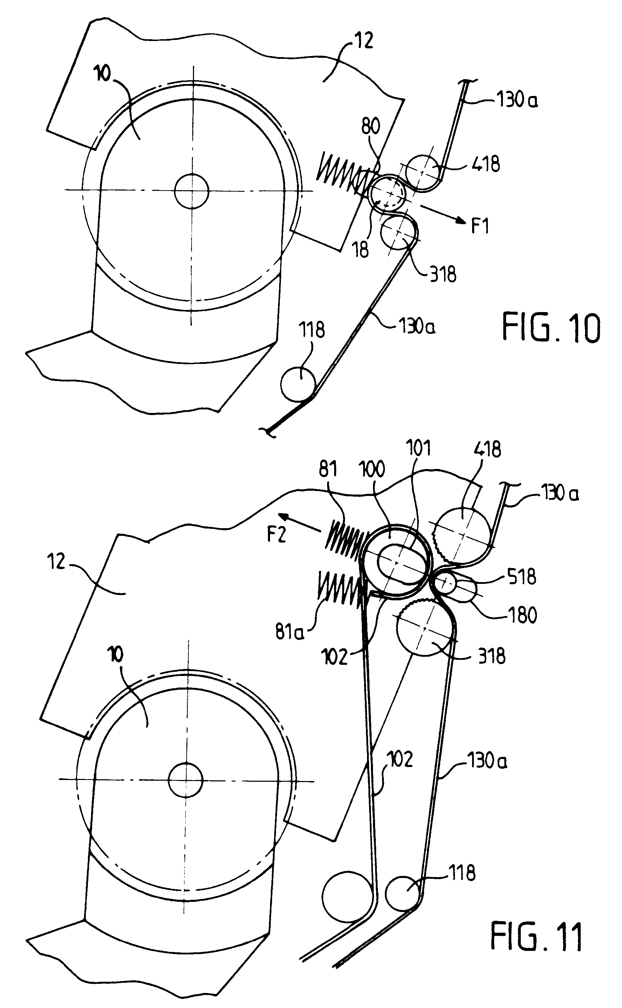

On peut, dans certains cas (voir fig. 9), en plus du tube traversant 18 monté sur l'armature du dossier, fixer des tubes traversants 318, 418 sur l'armature de l'assise et le tube traversant 18 est alors monté coulissant dans des fenêtres 80 pratiquées de chaque côté du dossier dans les goussets 16, 17. Un élément élastique 81 tend à ramener le tube traversant 18 dans la position la plus éloignée des tubes traversants 318, 418. Comme cela est visible à la fig 9, le tube traversant 18 est situé dans un plan incliné parallèle au plan défini par les tubes traversants 318, 418 et le tube 18 peut effectuer un mouvement (sens de la flèche F1 fig. 10) dans un plan perpendiculaire aux deux plans définis ci-dessus.

En cas de choc (voir fig. 10), le tube 18 coulisse dans les fenêtres 80 des goussets 16, 17 dans le sens de la flèche F1 (fig. 10) et prend appui à ce moment contre les tubes traversants 318, 418 en bloquant fermement le brin inférieur 130a de la ceinture de sécurité provoquant ainsi un couple antagoniste annulant tout effort sur les mécanismes d'articulation 10 montés sur le dossier 12.

A la fig. 11, il est prévu, en plus des tubes traversants 318, 418, une butée traversante 518 coulissant dans des fenêtres 180 percées dans les goussets 16, 17. Cette butée coopère avec un cylindre 100 monté dans des fenêtres 101 découpées également dans les goussets 16, 17.

Le cylindre 100, qui tend à être attiré vers l'intérieur (flèche F2) par un élément élastique 81, porte enroulé autour de lui un câble 102 maintenu sous tension par un deuxième élément élastique 81a, ce câble 102 étant fixé à son extrémité inférieure sur l'armature du dossier.

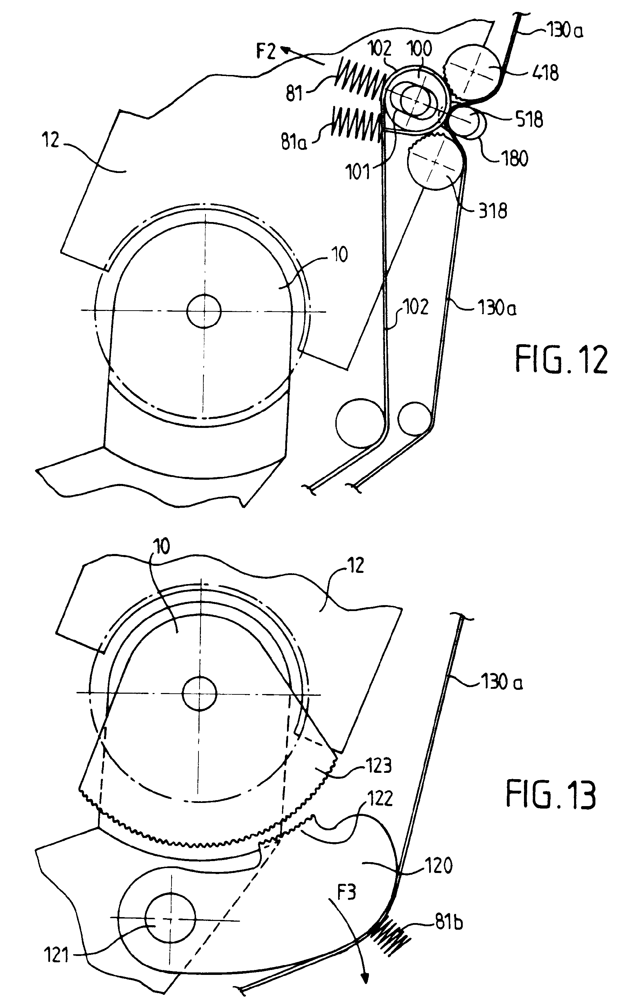

En cas de choc (fig. 12), l'élément élastique 81 se déforme, la butée 518 entraîne ainsi le cylindre 100 bloquant fermement le câble 102, ce d'autant plus que les tubes traversants 318, 418 sont crantés périphériquement pour assurer une bonne tenue du câble 102. Là encore le résultat est le même que celui énoncé précédemment.

Finalement, à la fig. 13, le brin inférieur 130a de la ceinture de sécurité arrivant par exemple d'un enrouleur automatique ou muni de l'un quelconque des dispositifs de blocage décrits aux figures précédentes, passe le long d'un segment en forme de sabot 120 articulé en 121 sur l'armature de l'assise.

La partie supérieure avant 122 du sabot 120 est crantée pour coopérer avec un secteur denté 123 fixé sur l'axe d'articulation de chaque mécanisme d'articulation de l'armature 12 du dossier 4.

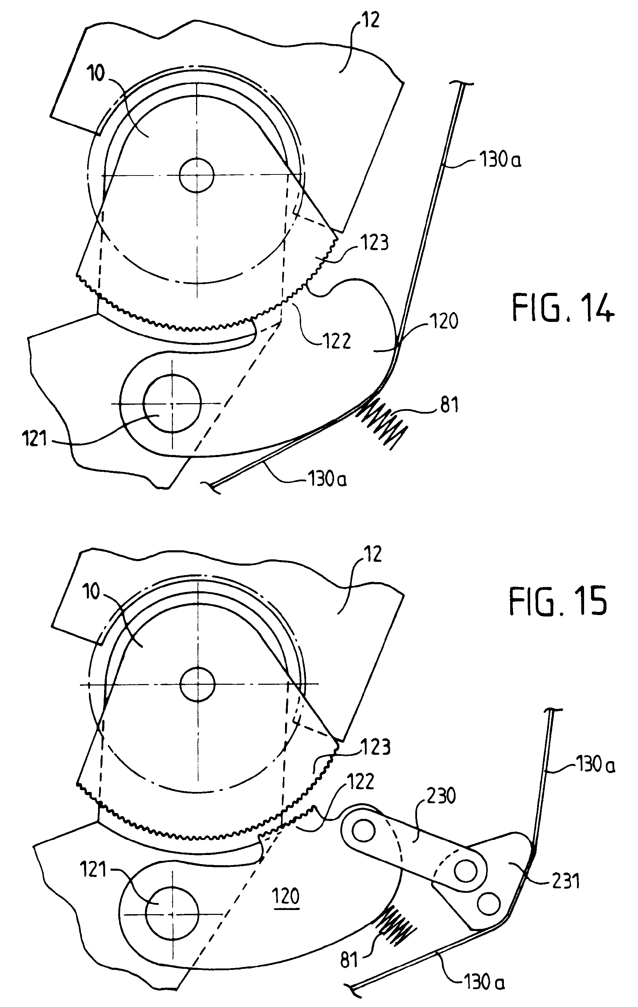

Il est prévu également un élément élastique 81b qui tend à ramener en arrière le sabot 120 dans le sens de la flèche F3 (fig. 13) mais qui se déforme lors d'un choc et, à ce moment, le crantage 122 pénètre dans les dents du secteur denté 123 (fig. 14) en bloquant ainsi complètement l'axe d'articulation des mécanismes d'articulation de l'armature du dossier 4, ce qui fait que ceux-ci ne supportent aucun couple tendant à les déformer.

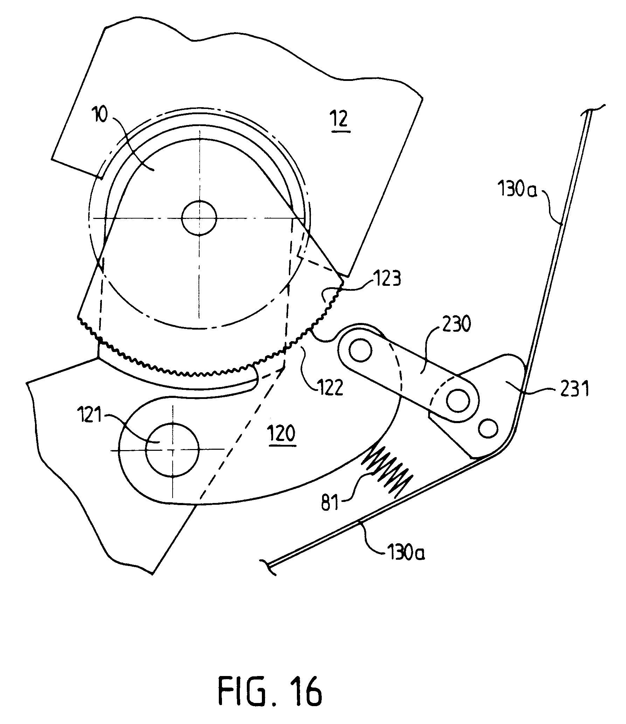

A la fig. 15, le segment denté 122 en forme de sabot est commandé par un levier 230 contrôlé par un patin 231 sur la surface extérieure duquel passe le brin 130a de la ceinture de sécurité de sorte que, comme il a été expliqué pour les cas précédents, en cas de choc, la denture 122 du segment 120 pénètre dans la denture du secteur denté 123 (voir fig. 16) pour verrouiller les mécanismes d'articulation de l'armature 12 du dossier 4 en évitant ainsi tout couple destructeur de ceux-ci. Cette action assure un frottement augmentant l'ancrage du brin inférieur 130a de la ceinture de sécurité (fig. 15). Finalement, un levier 230 (fig. 16) augmente la force bloquant le sabot 120 sur le secteur denté 123 dont le rôle sur le brin 130a de la ceinture 130 est le même que pour la fig. 15.

Dans tous les exemples de réalisation des fig. 8 à 16, le point A d'articulation des mécanismes réglant l'inclinaison du dossier du siège considéré occupe la même position que celle définie pour les fig. 4 et 5.

De plus, il est possible également de réaliser des ceintures de sécurité type parachute à quatre points embarqués mais, dans ce cas, le brin ventral est constitué par deux éléments arrimés chacun sur l'armature latérale arrière de l'assise et la serrure de fermeture se trouvant au milieu de la ceinture ventrale; cette serrure peut alors recevoir deux gâches fixées à la partie inférieure des brins d'épaule comme cela est connu. Le montage de chaque brin d'épaule est conforme à ce qui a été décrit précédemment pour le brin arrière 130a.

Finalement, il y a lieu de signaler que ces ceintures de sécurité embarquées sont munies des dispositifs connus permettant le réglage en longueur de chaque brin considéré afin de les régler en fonction de la corpulence du passager.

## Revendications

1. Siège pour véhicule muni d'une ceinture de sécurité à points de fixation embarqués sur l'armature du siège dans lequel l'une des extrémités (130a) de la sangle (30) formant la ceinture de sécurité est rendue solidaire de la partie basse arrière de l'armature (2) de l'assise du siège par un mécanisme de blocage (34, 43, 118, 18, 218 ; 18, 318, 418 ; 318, 418, 518) afin de former le premier point d'attache de la ceinture de sécurité, puis un passant d'épaule (21) placé à la partie supérieure de la face avant du dossier (4) assure le coulissement et le guidage du brin (130b) de la ceinture de sécurité au-dessus de l'épaule du passager, l'autre extrémité du brin (130c) de la ceinture de sécurité étant fixée sur une ferrure (31) solidaire de l'un des flasques latéraux de l'armature de l'assise afin de former le deuxième point d'attache de la ceinture de sécurité, puis une gâche (37) coopérant avec une serrure (39) formant le troisième point d'attache, inférieur, de la ceinture de sécurité, ladite serrure (39) étant solidaire du flasque latéral opposé au deuxième point d'attache sur l'armature (2) de l'assise, un mécanisme de blocage de la sangle (30) formant la ceinture de sécurité étant placé à l'arrière du dossier du siège considéré, caractérisé en ce que le passant d'épaule (21) est situé en avant de la partie supérieure de la face avant du dossier (4), et en ce que ledit mécanisme de blocage comprend des tubes traversants (118, 18, 218) écartés les uns des autres et disposés dans deux plans verticaux parallèles et dans trois plans horizontaux parallèles, tubes autour desquels s'enroule la sangle (30) de façon à former des brins (130c, 130d) dont la composante des forces est telle qu'il est créé une force antagoniste produisant un couple qui réduit considérablement le couple exercé sur les mécanismes d'articulation du dossier.

2. Siège suivant la revendication 1, caractérisé en ce que les deux flasques latéraux reçoivent les parties fixe et mobile des mécanismes de réglage d'inclinaison du dossier par rapport à l'assise et sont déplacés vers l'avant de l'assise (point 10) de manière à obtenir un décentrage de l'armature (12) du dossier (4) et donc du dossier (4) lui-même par rapport à l'assise.

3. Siège suivant l'une des revendications 1 ou 2, caractérisé en ce que le décentrage de l'armature du dossier par rapport à l'assise est d'environ 50 mm.

4. Siège suivant l'une des revendications 1 à 3, caractérisé en ce que le tube traversant (18) relié à la base du dossier peut coulisser transversalement par rapport aux tubes traversants (318, 418) dans un plan perpendiculaire au plan défini par les tubes traversants (318, 418) qui sont solidaires de l'assise afin de créer, lors d'une tension du brin arrière (130) de la sangle (30), un blocage de ce brin entre les trois tubes traversants (18, 318, 418).

5. Siège suivant l'une des revendications 1 à 3, caractérisé en ce que les deux tubes traversants (318, 418) sont solidaires de l'armature d'assise tandis que le tube (518) solidaire de l'armature du dossier du siège peut coulisser dans des lumières (180) percées dans la base de cette armature de dossier et est soumis à l'action de la sangle enroulée qui entraîne le cylindre (100) et provoque le blocage du câble (102) d'autant plus que les tubes (318, 418) sont crantés.

6. Siège suivant l'une des revendications 1 à 5, caractérisé en ce qu'en plus d'un organe de blocage de l'extrémité inférieure du brin (130a) de la sangle (30) formant la ceinture de sécurité, il est prévu sur l'axe de rotation des mécanismes de réglage de la position du dossier par rapport à l'assise un secteur denté (123) coopérant avec la denture (122) portée par un segment en forme de sabot (120) articulé sur l'armature de l'assise du siège, les dentures (122, 123) coopérant en cas de tension extrême de la sangle (30) pour bloquer, d'une part, les mécanismes d'articulation et, d'autre part, assurer un frottement augmentant l'ancrage du brin inférieur (130a) de cette ceinture de sécurité.

7. Siège suivant la revendication 6, caractérisé en ce que le sabot (120) est soumis à l'action d'un patin (231) sur lequel passe le brin (130a) de la sangle (30) de la ceinture de sécurité, ce patin (231) étant relié au sabot (120) par un levier (230) augmentant la force bloquant le sabot sur le secteur denté (123).

## Patentansprüche

1. Fahrzeugsitz mit in dem Sitzgestell integrierten Befestigungspunkten für einen Sicherheitsgurt, bei dem das eine Ende (130a) des den Sicherheitsgurt bildenden Gurts (30) mit dem unteren hinteren Teil des Gestells (2) der Sitzfläche des Sitzes durch eine Blockiereinrichtung (34, 43, 118, 18, 218; 18, 318, 418; 318, 418, 518) fest verbunden ist, um den ersten Befestigungspunkt des Sicherheitsgurts zu bilden, eine Schulterschlaufe (21) am oberen Bereich der Vorderseite der Rückenlehne (4) angeordnet ist und das Gleiten und die Führung des Gurtstrangs (130b) des Sicherheitsgurtes oberhalb der Schulter des Fahrgastes gewährleistet, das andere Ende des Gurtstrangs (130c) des Sicherheitsgurts an einem Beschlag 31 befestigt ist, der mit einem der seitlichen Flansche des Gestells der Sitzfläche fest verbunden ist, um den zweiten Befestigungspunkt des Sicherheitsgurts zu bilden, ein Schließblech (37) mit einem Schloß (39) zusammenwirkt und den dritten unteren Befestigungspunkt des Sicherheitsgurts bildet, wobei das Schloß (39) fest mit einem dem zweiten Befestigungspunkt am Gestell (2) der Sitzfläche gegenüberliegenden seitlichen Flansch verbunden ist, und eine Einrichtung zum Blockieren des den Sicherheitsgurt bildenden Gurts (30) vorgesehen ist, die an der Hinterseite der Rückenlehne des Sitzes angeordnet ist, **dadurch gekennzeichnet,** daß die Schulterschlaufe (21) vor der oberen Partie der Vorderseite der Rückenlehne (4) angeordnet ist und daß die Blockiereinrichtung Querrohre (118, 18, 218) aufweist, die im Abstand zueinander in zwei vertikalen und zueinander parallelen Ebenen und in drei horizontalen parallelen Ebenen angeordnet sind, wobei der Gurt (30) derart um die Rohre gewickelt ist, daß Gurtstränge (130c, 130d) gebildet sind, deren Kräftekomponente eine Gegenkraft erzeugt, die ein Moment hervorruft, das das auf die Anlenkeinrichtungen der Rückenlehne ausgeübte Moment beträchtlich herabsetzt.

2. Fahrzeugsitz nach Anspruch 1, **dadurch gekennzeichnet,** daß die beiden seitlichen Flansche die ortsfesten und die beweglichen Teile der Einrichtungen zum Einstellen der Neigung der Rückenlehne gegenüber der Sitzfläche aufnehmen und zur Vorderseite der Sitzfläche versetzt sind (Punkt 10), um eine Dezentrierung des Gestells (12) der Rückenlehne (4) und damit der Rückenlehne (4) selbst gegenüber der Sitzfläche zu erhalten.

3. Fahrzeugsitz nach einem der Ansprüche 1 oder 2, **dadurch** **gekennzeichnet,** daß die Versetzung des Gestells der Rückenlehne gegenüber der Sitzfläche ungefähr 50 mm beträgt.

4. Fahrzeugsitz nach einem der Ansprüche 1 bis 3, **dadurch** **gekennzeichnet,** daß das mit der Unterseite der Rückenlehne verbundene Querrohr (18) gegenüber den Querrohren (318, 418) in einer Ebene quergerichtet gleiten kann, die rechtwinklig zu einer Ebene verläuft, die durch die Querrohre 318, 418) definiert ist, die mit der Sitzfläche fest verbunden sind, um anläßlich einer Spannung des hinteren Gurtstrangs (130) des Gurts (30) ein Blockieren dieses Gurtstrangs zwischen den drei Querrohren (18, 318, 418) hervorzurufen.

5. Fahrzeugsitz nach einem der Ansprüche 1 bis 3, **dadurch** **gekennzeichnet,** daß die beiden Querrohre (318, 418) mit dem Gestell der Sitzfläche fest verbunden sind, während das Rohr (518), das mit dem Gestell der Rückenlehne des Sitzes fest verbunden ist, in Schlitzen (180) gleiten kann, die in der Basis dieses Gestells der Rückenlehne ausgebildet sind, und unter der Wirkung des aufgewickelten Gurts steht, der auf den Zylinder (100) einwirkt und das Blockieren des Kabels (102) hervorruft, um so mehr als die Rohre (318, 418) gezahnt sind.

6. Fahrzeugsitz nach einem der Ansprüche 1 bis 5, **dadurch** **gekennzeichnet,** daß zusätzlich zu einer Einrichtung zum Blockieren des unteren Endes des Gurtstrangs (130a) des den Sicherheitsgurt bildenden Gurts (30) auf der Drehachse der Einrichtungen zum Einstellen der Stellung der Rücklehne gegenüber der Sitzfläche ein gezahnter Sektor (123) vorgesehen ist, der mit der Verzahnung (122) an einem schuhförmigen Segment (120) zusammenwirkt, das am Gestell der Sitzfläche des Sitzes angelenkt ist, wobei die Verzahnungen (122, 123) im Falle einer extremen Spannung im Gurt (30) zusammenwirken, um einerseits die Anlenkeinrichtungen zu blockieren und andererseits eine Reibung zu gewährleisten, welche die Verankerung des unteren Gurtstrangs (130a) dieses Sicherheitsgurts verstärkt.

7. Fahrzeugsitz nach Anspruch 6, **dadurch gekennzeichnet,** daß das schuhförmige Segment (120) unter der Einwirkung eines Schuhs (231) steht, der mit dem schuhförmigen Segment (120) durch einen Hebel (230) verbunden ist, wodurch sich die Kraft erhöht, die das schuhförmige Segment mit dem gezahnten Sektor (123) verriegelt.

## Claims

1. Vehicle seat provided with a safety belt having fixation points integrated in the seat armature, in which one of the ends (130a) of the strap (30) that forms the safety belt is fixedly connected to the rear lower portion of the armature (2) of the seating portion of the seat via a blockage mechanism (34, 43, 118, 18, 218 ; 18, 318, 418 ; 318, 418, 518), in order to form the first fixation point of the safety belt, then a shoulder keeper (21) disposed on the upper portion of the front face of the seat back (4) provides for the sliding and guiding of the run (130b) of the safety belt above the passenger's shoulder, the other end of the run (130c) of the safety belt being secured on a fitting (31) that is fixed to one of the side flanges of the seating portion armature in order to form the second fixation point of the safety belt, then a catch (37) cooperating with a lock (39) to form the third, lower, fixation point of the safety belt, said lock (39) being rigidly connected to the side flange opposite to the second fixation point on the seating portion armature (2), a blocking mechanism of the strap (30) that forms the safety belt being placed at the rear of the seat back of the seat in consideration, characterized in that the shoulder keeper (21) is situated frontwardly with respect to the upper portion of the front face of the seat back (4) and in that said blockage mechanism comprises throughgoing tubes (118, 18, 218) that are spaced apart the one from the other and disposed in two parallel vertical planes and in three parallel horizontal planes, around which tubes the strap is wound in order that runs (130c, 130d) are defined, the component of the forces of which being such as to create an antagonistic force which produces a torque that considerably reduces the torque exerted on the seat back articulation mechanisms.

2. Seat according to claim 1, characterized in that the two side flanges receive the fixed and movable parts of the mechanisms for adjusting the inclination of the seat back with respect to the sitting portion, and are displaced frontwardly of the seating portion (point 10) in order to obtain a decentring of the armature (12) of the seat back (4) and therefore of the seat back (4) itself with respect to the seating portion.

3. Seat according to one of claims 1 or 2, characterized in that the decentring of the seat back armature with respect to the seating portion is of about 50 mm.

4. Seat according to one of claims 1 to 3, characterized in that the throughgoing tube (18) connected to the base of the seat back is slidable transversely with respect to the throughgoing tubes (318, 418) in a plane perpendicular to the plane defined by the throughgoing tubes (318, 418) which are fixedly connected to the seating portion so as to create, when a tension is applied to the rear run (130) of the strap (30), a blockage of this run between the three throughgoing tubes (18, 318, 418).

5. Seat according to one of claims 1 to 3, characterized in that two throughgoing tubes (318, 418) are fixedly connected to the seating portion armature while the tube (518) that is rigidly connected to the seat back armature is slidable in openings (180) provided in the base of this seat back armature and is subjected to action of the wound strap that drives the cylinder (100) and blocks the cable (102) all the more as the tubes (318, 418) are serrated.

6. Seat according to one of claims 1 to 5, characterized in that, in addition to a blockage mechanism of the lower end of the run (130a) of the strap (30) that forms the safety belt, there is provided on the axis of rotation of the mechanisms for adjusting the position of the seat back relative to the seating portion, a toothed sector (123) that cooperates with the toothing (122) carried by a shoe-shaped segment (120) articulated on the seating portion armature, the toothings (122, 123) cooperating when extreme tension is encountered on the strap (30) for, on the one hand, blocking the articulation mechanisms and, on the other hand, providing a rubbing effect to increase anchoring of the lower run (130a) of this safety belt strap.

7. Seat according to claim 6, characterized in that the shoe (120) is subjected to action of a pad (231) on which the run (130a) of the strap (30) of the safety belt extends, this pad (231) being connected to the shoe (120) via a lever (230) to increase the force blocking the shoe on the toothed sector (123).
